# EUROPÄISCHE PATENTANMELDUNG

(11) **EP 1 201 999 A2**
(43) Veröffentlichungstag der Anmeldung: **02.05.2002**
(21) Anmeldenummer: 01124801.0
(22) Anmeldetag: 17.10.2001
(51) Int. Cl.: F24C 15/20, A21B 1/26

(54) **Back- und/oder Bratofen**

(30) Priorität: 27.10.2000 DE 10053412
(71) Anmelder: BSH Bosch und Siemens Hausgeräte GmbH, 81669 München (DE)
(72) Erfinder: Holzer, Rainer, 83365 Freilassing (DE)

(57) **Zusammenfassung**

Back- und/oder Bratofen mit einem Wärmetauscher (18) zwischen einem Garraum-Abluftweg (16) und einem Frischluftzufuhrweg (14) von der Außenumgebung (12) in den Garraum (2).

## Beschreibung

Die Erfindung betrifft einen Back- und/oder Bratofen gemäß dem Oberbegriff von Anspruch 1.

Der Back- und/oder Bratofen enthält einen Garraum zum Backen, Braten, Grillen oder dergleichen, mindestens eine Gebläseeinrichtung zur Erzeugung einer Luftströmung im Garraum und mindestes eine Heizeinrichtung zum Heizen des Garraums.

Ein Backofen dieser Art ist aus der DE 43 24 507 A1 bekannt. Zur Reinigung der Garraumluft (Wrasen) fördert eine Gebläseeinrichtung die Garraumluft über eine erste Luftleitung aus dem Garraum heraus, dann durch eine Kondensatoreinrichtung, und anschließend über eine zweite Luftleitung wieder in den Garraum zurück. Durch eine Zweiwege-Strömungsweiche kann ein Teil oder gesamte gereinigte Wrasen in die Außenumgebung anstatt zurück in den Garraum gefördert werden. Die Abfuhr und Zufuhr des Wrasen in bzw. aus dem Garraum erfolgt durch Öffnungen im Garraumboden.

Aus der DE 42 11 755 A1 ist ein Back- und Bratofen mit einer Ofenmuffel bekannt, die in ihrer deckseitigen Muffelwand eine Wrasenabzugsöffnung aufweist. Oberhalb der Ofenmuffel ist ein Kühlluftgebläse und eine Wrasenabzugseinrichtung angeordnet, durch welche durch die Deckwand der Ofenmuffel Wrasen abgesaugt und an der Ofenfrontseite in die Außenumgebung abgegeben wird.

Ferner sind auf anderen technischen Gebieten Wärmetauscher bekannt. Beispielsweise zeigt die DE-Gebrauchsmusterschrift G 83 13 416.6 einen Kreuzstromwärmetauscher.

Durch die Erfindung soll die Aufgabe gelöst werden, den Back- und/oder Bratofen derart auszubilden, dass er weniger Betriebenergie benötigt. Hierbei soll die begrenzte Baugröße solcher Back- und/oder Bratöfen beibehalten werden.

Diese Aufgabe wird gemäß der Erfindung durch die Merkmale von Anspruch gelöst.

Gemäß Anspruch 1 ist der Back- und/oder Bratofen dadurch gekennzeichnet, dass zwischen einem von der Aussenumgebung in den Garraum führenden Frischluftzufuhrweg und einem vom Garraum in die Aussenumgebung führenden Abluftweg eine Wärmetauschereinrichtung zum Wärmetausch zwischen den beiden Wegen vorgesehen ist, und dass die Gebläseeinrichtung zur Erzeugung der Frischluftströmung durch den Frischluftzufuhrweg und der Abluftströmung durch den Abluftweg ausgebildet ist.

Weitere Merkmale der Erfindung sind in den Unteransprüchen enthalten.

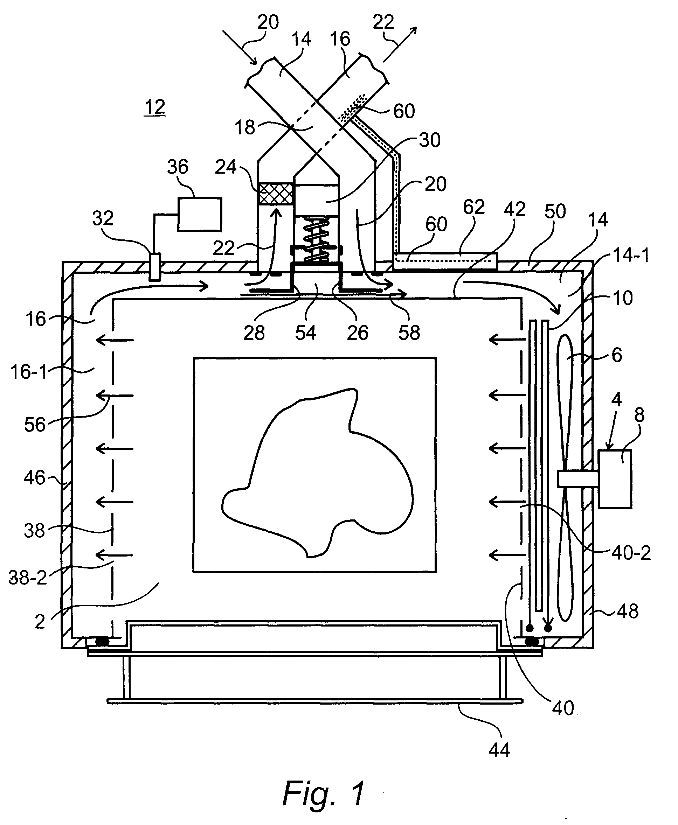

Die Erfindung wird im Folgenden mit Bezug auf die Zeichnung anhand einer bevorzugten Ausführungsform als Beispiel beschrieben. In der Zeichnung zeigt
- Fig. 1: eine Draufsicht auf einen horizontalen Querschnitt eines Back- und/oder Bratofens nach der Erfindung.

Der Back- und/oder Bratofen enthält einen Garraum 2 zum Backen, Braten, Grillen und dergleichen, mindestens eine Gebläseeinrichtung 4 mit einem Gebläserotor 6 und einem Gebläsemotor 8 zur Erzeugung einer Luftströmung im Garraum 2, und mindestens eine Heizeinrichtung 10 zum Heizen des Garraumes 2. Zwischen einem von der Außenumgebung 12 in den Garraum 2 führenden Frischluftzufuhrweg 14 und einem vom Garraum 2 in die Außenumgebung 12 führenden Abluftweg 16 ist eine Wärmetauschereinrichtung 18, vorzugsweise ein Kreuzstromwärmetauscher, zum Wärmetausch zwischen den beiden Wegen 14 und 16 vorgesehen. Die Gebläseeinrichtung 4 ist zur Erzeugung der Frischluftströmung 20 durch den Frischluftzufuhrkanal 14 und der Abluftströmung 22 durch den Abluftweg 16 ausgebildet und angeordnet.

Ein Filter 24, vorzugsweise ein katalytischer Filter, ist im Abluftweg 16 dem Wärmetauscher 18 vorgeordnet.

Mindestens im Abluftweg 16, vorzugsweise jedoch auch im Frischluftzufuhrweg 14, befindet sich ein verstellbares Sperrelement 28 bzw. 26, beispielsweise eine Klappe oder ein Schieber, zum mindestens teilweisen Aufmachen und Zumachen des betreffenden Luftweges 16 bzw. 14. Die Verstellung der Sperrelemente 26 und 28 kann je nach Ausführungsform des Ofens manuell und/oder in Abhängigkeit von dem eingeschalteten Ofenbetriebsprogramm und/oder in Abhängigkeit von einem Pyrolysebetrieb zum Abbrennen von Speiseresten im Garraum 2 und damit zum Reinigen dieses Garraumes verstellbar sein.

Gemäß der bevorzugten Ausführungsform von Fig. 1 ist ein Stellglied 30, vorzugsweise ein elektromagnetisches Stellglied, zur automatischen Einstellung der Sperrelemente 26 und 28 in Abhängigkeit von Betriebssituationen vorgesehen, beispielsweise in Abhängigkeit von einer Pyrolyse oder der Einstellung eines bestimmten Back- oder Bratvorganges.

Die bevorzugte Ausführungsform von Fig. 2 enthält einen sogenannten Pyrolysesensor 32 zur automatischen Durchführung einer Pyrolyse im Garraum in Abhängigkeit vom jeweiligen Luft- bzw. Gaszustand im Garraum 2. Hierfür kann der Pyrolysesensor 32 im Garraum 2 oder vorzugsweise im Abluftweg 16, vorzugsweise stromaufwärts von dessen Sperrelement 28, angeordnet sein. Luft- bzw. Gaszustände, die von dem Pyrolysesensor 32 detektiert werden, können beispielsweise der Feuchtigkeitsgehalt, die Temperatur, der Fettanteil oder sonstige Gasanteile oder Schmutzpartikelanteile im Garraum 2 bzw. in dessen Abluftstrom im Abluftweg 16 sein.

Eine Steuer- oder Regeleinrichtung 36 stellt in Abhängigkeit von dem vom Pyrolysesensor 32 detektierten Luft- bzw. Gaszustand des Garraumes 2 über das Stellglied 30 mindestend das Abluft-Sperrelement 28, vorzugsweise jedoch beide Sperrelemente 26 und 28 jeweils gleichzeitig ein. Beispielsweise müssen mindestens am Ende einer pyrolytischen Reinigung des Garraumes 2 die Sperrelemente 26 und 28 in eine Stellung gebracht werden, in welcher der Abluftweg 16 und der Frischluftzufuhrweg 14 offen sind, damit die Verbrennungsgase aus dem Garraum 2 abgeführt und durch Frischluft ersetzt werden können.

Vorzugsweise sind beide Sperrelemente 26 und 28 mit dem gleichen Stellelement 30 funktionsmäßig, vorzugsweise auch mechanisch, verbunden, so dass sie von diesem gleichen Stellelement 30 jeweils gleichzeitig eingestellt werden.

Der Abluftweg 16 führt durch die in Fig. 1 linke Garraum-Seitenwand 38 aus dem Garraum 2 heraus. Der Frischluftzufuhrweg 14 führt durch die der linken Seitenwand 38 gegenüberstehende rechte Garraum-Seitenwand 40 in den Garraum 2 hinein. Die beiden Seitenwände 38 und 40 sind mit einer Vielzahl von Luftdurchlassöffnungen 38-2 bzw. 40-2 versehen, z. B. Löcher oder Schlitze, und begrenzen zusammen mit einer Rückwand 42 und einer Tür 44 auf der Frontseite den Garraum 2.

Linke und rechte Isolationsseitenwände 46 und 48 und eine Isolationsrückwand 50 (Ofenmuffel-Wände) haben Abstand zu den Seitenwänden 38 und 40 und der Rückwand 42 und bilden zwischen sich den in den Garraum 2 mündenden Endabschnitt 14-1 des Frischluftzufuhrweges 14 bzw. den aus dem Garraum 2 wegführenden Anfangsabschitt 16-1 des Abluftweges 16.

Es ist ein Verbindungskanal 54 auf der Außenseite der Garraum-Rückwand 42 vorgesehen, über welchen der Abluftweg 16 und der Frischluftzufuhrweg 14, je an einer zwischen dem Wärmetauscher 18 und dem Garraum 2 gelegenen Stelle, miteinander verbunden oder verbindbar sind zur Bildung eines Rezirkulationskreislaufes, in welchem sich die Gebläseeinrichtung 4 befindet. Dadurch kann von der Gebläseeinrichtung 4 eine Rezirkulation mindestes eines Teiles oder der gesamten Garraumluft 56 von dem Garraum 2 durch die perforierte linke Garraum-Seitenwand 38 und dann durch den stromaufwärtigen Anfangsabschnitte 16-1 des Abluftweges 16 in das linke Ende des Verbindungskanals 54 und dann aus dessen rechtem Ende in den stromabwärtigen Endabschnitt 14-1 des Frischluftzufuhrkanals 14 und von diesem durch die perforierte rechte Garraum-Seitenwand 40 und dann durch diese hindurch wieder in den Garraum 2 erzeugt werden. Die durch den Verbindungskanal 54 rezirkulierende Garraumluft oder Garraumluftanteil ist durch einen Pfeil 58 schematisch angedeutet. Der Verbindungskanal 54 erstreckt sich zwischen den beiden Sperrelementen bzw. Strömungsweichen 26 und 28. In der einen Endstellung der Sperrelemente 26 und 28 ist der stromaufwärtige Anfangsabschnitt des Abluftweges 16-1 gegenüber dem Filter 24, und damit auch gegenüber dem Wärmetauscher 18 vollständig verschlossen (oder gemäß anderer Ausführungsform mindestens teilweise verschlossen) und zu dem linken Ende des Verbindungskanals 54 hin vollständig geöffnet (oder gemäß anderer Ausführungsform mindestens teilweise geöffnet). Gleichzeitig ist die Strömungsverbindung zwischen dem stromabwärtigen Endabschnitt 14-1 des Frischluftzufuhrweges 14 und dem Wärmetauscher 18 vollständig geschlossen (oder gemäß anderer Ausführungsform mindestens teilweise geschlossen) und zum benachbarten rechten Ende des Verbindungskanals 54 hin vollständig offen (oder mindestens teilweise offen). Diese Stellungen der Sperrelemente 26 und 28 sind in Fig. 1 in gestrichelten Linien schematisch angedeutet. Die Sperrelemente 26 und 28 sind in ausgezogenen Linien in einer Zwischenstellung dargestellt, in welcher der stromaufwärtige Anfangsabschnitt 16-1 des Abluftweges und der stromabwärtige Endabschnitt 14-1 des Frischluftzufuhrweges sowohl zum Wärmetauscher 18 hin als auch zu dem Verbindungskanal 54 hin je teilweise offen sind. Hierbei kann ein Anteil 22 der Garraumluft (Wrasen) 56 in die Außenumgebung 12 gefördert, gleichzeitig Frischluft 20 in den Garraum 2 gefördert, und ein Anteil 58 der Garraumluft 56 rezirkuliert werden. Vorzugsweise ist auch eine Stellung möglich, zusätzlich oder alternativ zu der gezeigten Zwischenstellung, bei welcher der Verbindungskanal 54 an seinen beiden Enden vollständig verschlossen ist, so dass keine Luftrezirkulation stattfinden kann, und der Abluftweg 16 und der Frischluftzufuhrweg 14 an den Sperrelementen 26 und 28 vollständig geöffnet sind.

Die Heizvorrichtung 10 weist vorzugsweise mindestens einen blanken Heizdraht ohne Isolationsmantel auf, der im Frischluftzufuhrweg 16 zwischen dem Gebläserotor 6 und der rechts gezeigten preforierten Seitenwand 40 des Garraumes 2 angeordnet ist, so dass er sich im Luftstrom des Gebläserotors 6 je auf kleinem Abstand von diesem Gebläserotor 6 und der rechten Seitenwand 40 befindet. Da der blanke Heizdraht 10 keinen Isolationsmantel aufweist, wird eine sehr wirksame Wärmeübertragung auf den Luftstrom des Gebläserotors erzielt. Die Hauptblasrichtung des Gebläserotors 6 ist rechtwinkelig zu den Seitenwänden 38 und 40 gerichtet.

Die Seitenwände 38 und 40 und die Rückwand 42 des Garraumes bestehen vorzugsweise aus gut wärmeleitendem Material, damit eine Wärmetauscherwirkung zwischen dem Garraum und den beiden Strömungswegen 14 und 16 stattfinden kann.

Im folgenden werden Einzelfunktionen beschrieben.
Beheizung: Für die Beheizung wird vorzugsweise ein z. B. wendelförmiger Heizleiter 10 gewählt, der mit dem Luftstrom des Gebläserotor 6 direkt, d. h. ohne Zwischenelemente oder Umlenkungen, angeblasen wird. Durch den Verzicht von Hüllstoff um den Heizdraht 10 ergibt sich eine Verringerung der Verlustwärme. Ferner ist der Wärmeübergang vom blanken Heizdraht 10 auf die vorbeiströmende Luft besser als bei bekannten Heizungsarten wie z. B. Oberhitze und Unterhitze in einem Backofen. Durch die perforierte, ihm gegenüberliegende Seitenwand 40 wird ein Kontakt von Personen mit dem an elektrische Spannung angeschlossenen Heizdraht 10 verhindert. Selbstverständlich kann diese Beheizungsart mit allen herkömmlichen Beheizungsarten wie z. B. Grill, Oberhitze und Unterhitze kombiniert werden. Für die Reinigung des Garraumes ist ein Pyrolysebetrieb vorteilhaft.

Garraum (Backrohr): Die beiden perforierten Seitenwände 38 und 40 haben eine Vielzahl von Löchern oder Schlitzen, um eine Zirkulation der erhitzten Luft ohne große Strömungswiderstände zu ermöglichen. Die am blanken Heizdraht 10 erhitzte Luft wird von dem Gebläse 4 beschleunigt und zum Gargut (Backgut, Grillgut usw.) geleitet. Durch diese erzwungene Konvektion wird nicht nur eine Beschleunigung der Aufheizzeit im Backraum erreicht, sondern der Wärmeübergang auf das Gargut wird ebenfalls erheblich verbessert. Je nach Gargut oder Bratgut oder Grillgut kann die Ventilatordrehzahl und die Beheizung (Dauer, Temperatur, mit oder ohne zusätzliche herkömmlichen Beheizungsarten wie Grill, Ober- und Unterhitze) eingestellt oder geregelt werden. Da die erhitzte Luft beim Verlassen des Backraumes auf der, dem Gebläse 4 gegenüberliegenden Garraum-Seitenwand 38 noch eine erhebliche Menge an Wärmeenergie enthält, wird sie hinter der Rückwand 42 des Garraumes 2 entlanggeführt und dann erneut über den Gebläserotor 6 und den blanken Heizdraht 10 in den Garraum 2 zurückgeleitet. Es entsteht somit ein Luftkreislauf ähnlich wie in einem Windkanal. Zur Erzeugung einer turbulenten Luftströmung, die sich auf den Garvorgang (Backen, Braten, Grillen und dergleichen) günstig auswirkt, ist die Verwendung und der Betrieb eines weiteren Gebläses im Garraum 2 möglich.

Strömungs-Sperrelemente 26, 28 (Klappen oder Schieber oder dergleichen): Während eines Back-, Brat- oder Grillprozesses reichert sich die Luft im Garraum 2 mit Wasserdampf, Fett und anderen Verbrennungsgasen an. Im Gegensatz zu bekannten Backöfen werden diese Gase gemäß der Erfindung nicht an der Ofenfrontseite oder der Ofenrückseite in die Außenumgebung abgeleitet, sondern über ein verstellbares Strömungs-Sperrelement bzw. eine Strömungsweiche 28 in die Außenumgebung 12 befördert. Der Antrieb der Sperrelemente oder Strömungsweichen 26 und 28 erfolgt vorzugsweise über das elektromagnetische Stellglied 30. Mit Hilfe des sogenannten Pyrolysesensors 32 kann auf diese Weise abhängig vom Zustand der Luft des Garraumes 2 ermittelt werden, beispielsweise der Wasserdampfgehalt, der Gasgehalt und/oder die Temperatur der Luft bzw.des Wrasens, welcher im Garraum ist oder aus diesem durch den Abluftweg 16 strömt. Über die Steuer- oder Regeleinrichtung 36 wird dann abhängig von dem Zustand der Garraumluft die Stellung der Sperrelemente 26 und 28 gesteuert oder geregelt. Beispielsweise kann die Einrichtung derart ausgebildet sein, dass bei erhöhtem Wasserdampfgehalt der Garraumluft die Sperrelemente 26 und 28 in eine Offenstellung bewegt werden, in welcher die Garraumgase in die Außenumgebung 12 entweichen können, und im Gegenzug dazu Frischluft von der Außenumgebung in den Garraum zugeführt und erhitzt wird.

Wärmetauscher 18: Bei dem oben genannten Gasaustausch zwischen dem Garraum 2 und der Außenumgebung 12 besteht gemäß der Erfindung die Möglichkeit mit Hilfe des Wärmetauschers den ausströmenden Gasen 22 die in ihnen enthaltene Wärmeenergie zu entziehen und auf die Frischluft 20 zu übertragen. Der Wärmetauscher 18 ist vorzugsweise ein Kreuzstrom-Wärmetauscher. Für die Auslegung dieses Wärmetauschers stehen zwei grundsätzliche Auslegungsmöglichkeiten offen. So kann der Wärmetauscher auf hohen Energierückfluss ausgelegt werden. Dies bedeutet aber den Anfall einer großen Kondensatmenge 60 im Wärmetauscher 18, die wieder entsorgt werden muss, beispielsweise durch Ableitung durch Schwerkraft in eine Verdampfungswanne 62. Die zweite Möglichkeit wäre die Auslegung des Wärmetauschers 18 auf einen niedrigeren Energierückfluss, und zwar so, dass der Taupunkt der erhitzten Abluft 22 nicht wesentlich unterschritten wird. Somit würde nur wenig Kondensat anfallen. Zur Vermeidung einer Verschmutzung des Wärmetauschers 18 durch die abströmenden Gase ist eine pyrolytische Reinigung des Garraumes 2 empfehlenswert.

Um Wärme-Leckverluste zu reduzieren empfiehlt es sich, den kompletten Ofen mit einer guten Wärmedämmung 46, 48, 50 zu umgeben.

Die Erfindung hat insbesondere folgende Vorteile: große Energieeinsparung; die Möglichkeit der Regulierung des Feuchtgarprozesses im Garraum 2; Einsparung von aufwendigen Be- und Entlüftungseinrichtungen zum Schutz der Elektronik der Steuer- oder Regeleinrichtung 36 vor Überhitzung.

## Patentansprüche

1. Back- und/oder Bratofen, enthaltend einen Garraum (2) zum Backen, Garen, Grillen oder dergleichen, mindestens eine Gebläseeinrichtung (4) zur Erzeugung einer Luftströmung im Garraum, und mindestens eine Heizeinrichtung (10) zum Heizen des Garraumes,
**dadurch gekennzeichnet,**
**dass** zwischen einem von der Außenumgebung(12) in den Garraum (2) führenden Frischluftzufuhrweg (14) und einem vom Garraum (2) in die Außenumgebung (12) führenden Abluftweg (16) eine Wärmetauschereinrichtung (18) zum Wärmetausch zwischen den beiden Wegen (14,16) vorgesehen ist, und dass die Gebläseeinrichtung (4) zur Erzeugung der Frischluftströmung durch den Frischluftzufuhrweg (14) und der Abluftströmung durch den Abluftweg (16) ausgebildet ist.

2. Back- und/oder Bratofen nach Anspruch 1,
**dadurch gekennzeichnet,**
**dass** die Wärmetauschereinrichtung (18) einen Kreuzstromwärmetauscher aufweist.

3. Back- und/oder Bratofen nach einem der vorhergehenden Ansprüche,
**dadurch gekennzeichnet,**
**dass** ein Filter (24), vorzugsweise ein katalytischer Filter, im Abluftweg (16) der Wärmetauschereinrichtung (18) vorgeschaltet ist.

4. Back- und/oder Bratofen nach einem der vorhergehenden Ansprüche,
**dadurch gekennzeichnet,**
**dass** mindestens in einem der beiden Frischluftzufuhrweg (14) und/oder Abluftweg (16) ein verstellbares Sperrelement (26,28) angeordnet ist zum mindestens teilweisen Aufmachen und Zumachen des Luftweges (14,16).

5. Back- und/oder Bratofen nach Anspruch 4,
**dadurch gekennzeichnet,**
**dass** ein Stellglied (30) zur automatischen Einstellung des Sperrelementes (26, 28) in Abhängigkeit von Betriebssituationen vorgesehen ist.

6. Back- und/oder Bratofen nach einem der vorhergehenden Ansprüche,
**dadurch gekennzeichnet,**
**dass** ein Pyrolysesensor (32) vorgesehen ist zur automatischen Durchführung einer Pyrolyse im Garraum (2) in Abhängigkeit vom Luft- bzw. Gaszustand im Garraum.

7. Back- und/oder Bratofen nach Anspruch 4 in Kombination mit Anspruch 5 und 6,
**dadurch gekennzeichnet,**
**dass** eine Steuer- oder Regeleinrichtung (36) vorgesehen ist, von welcher in Abhängigkeit von dem Luft- bzw. Gaszustand im Garraum (2), der vom Pyrolysesensor (32) detektiert wird, durch das Sperrelement (26,28) das Stellglied (30) einstellbar ist.

8. Back- und/oder Bratofen nach einem der Ansprüche 5 bis 7,
**dadurch gekennzeichnet,**
**dass** im Frischluftzufuhrweg (14) und im Abluftweg (16) je eines der Sperrelemente (26,28) angeordnet ist und dass beide Sperrelemente (26,28) zur gemeinsamen Betätigung funktionsmäßig oder mechanisch miteinander gekoppelt sind.

9. Back- und/oder Bratofen nach einem der vorhergehenden Ansprüche,
**dadurch gekennzeichnet,**
**dass** der Abluftweg (16) durch eine Garraum-Seitenwand (38) aus dem Garraum hinausführt und der Frischluftzufuhrweg (14) durch eine dieser Garraum-Seitenwand (38) gegenüberstehende andere Garraum-Seitenwand (40) in den Garraum (2) mündet, und dass die Gebläseeinrichtung (4) im Frischluftzufuhrweg (14) angeordnet ist zur Luftförderung in den Garraum (2).

10. Back- und/oder Bratofen nach Anspruch 9,
**dadurch gekennzeichnet,**
**dass** ein Verbindungskanal (54) vorgesehen ist, über welchen der Abluftweg (16) und der Frischluftzufuhrweg (14) außerhalb des Garraumes (2), je an einer im Strömungsweg zwischen dem Garraum (2) und der Wärmetauschereinrichtung (18) gelegenen Stelle, miteinander verbunden oder verbindbar sind zur Bildung eines Rezirkulationskreislaufes, in welchem sich die Gebläseeinrichtung (4) befindet, so dass von der Gebläseeinrichtung (4) eine Rezirkulation von mindestens einem Teil der Garraumluft (56) nacheinander vom Garraum (2) durch den sich anschließenden Anfangsabschnitt (16-1) des Abluftweges (16), den Verbindungskanal (54), den in den Garraum (2) führenden Endabschnitt (14-1) des Luftzufuhrweges (14) und dann wieder zurück in den Garraum (2) erzeugbar ist.

11. Back- und/oder Bratofen nach einem der Ansprüche 4 bis 10,
**dadurch gekennzeichnet,**
**dass** die Sperrelemente (26,28) je im Strömungsweg zwischen dem Garraum (2) und der Wärmetauschereinrichtung (18) angeordnet sind.

12. Back- und/oder Bratraum nach Anspruch 11,
dadruch **gekennzeichnet**,
dass eines der Sperrelemente (28) im Abluftweg (16) an einer zwischen dem Garraum (2) und der Wärmetauschereinrichtung (18) gelegenen Stelle angeordnet und als Weiche ausgebildet ist zur je mindestens teilweisen Verbindung des von Garraum (2) abgehenden Anfangsabschnittes (16-1) des Abluftweges (16) alternativ mit dem Verbindungskanal (54) oder mit dem vom Sperrelement (28) zur Wärmetauschereinrichtung (18) führenden Abluftwegabschnitt, und dass ein anderes Sperrelement (26) im Frischluftzufuhrweg (14) an einer zwischen der Wärmetauschereinrichtung (18) und dem Garraum (2) gelegenen Stelle angeordnet und als Weiche ausgebildet ist zur je mindestens teilweisen Verbindung des in den Garraum (2) führenden Endabschnittes (14-1) des Frischluftzufuhrweges (14) alternativ mit dem von der Wärmetauschereinrichtung (18) zu diesem Sperrelement (26) führenden Abschnitt des Frischluftzufuhrweges (14) oder mit dem Verbindungskanal (54).

13. Back- und/oder Bratofen nach Anspruch 12,
**dadurch gekennzeichnet,**
**dass** die Sperrelemente (26,28) auf Zwischenstellungen einstellbar sind zur gleichzeitigen teilweisen Strömungsverbindung des Anfangsabschnittes (16-1) des Abluftweges (16) sowohl mit dem Verbindungskanal (54) als auch mit dem Wärmetauscher (18) bzw. zur gleichzeitigen Verbindung des Endabschnittes (14-1) des Frischluftzufuhrweges (14) sowohl mit dem Wärmetauscher (18) als auch mit dem Verbindungskanal (54), so dass gleichzeitig die Garraumluft (56) über dem Verbindungskanal (54) rezirkulierbar ist als auch verbrauchte Garraumluft abführbar und Frischluft in den Garraum zuführbar ist.

14. Back- und/oder Bratofen nach einem der vorhergehenden Ansprüche,
**dadurch gekennzeichnet,**
**dass** die Heizeinrichtung (10) mindestens einen blanken elektrischen Heizdraht aufweist, der im Frischluftzufuhrweg (14) stromabwärts der Gebläseeinrichtung (4) in deren Luftstrom angeordnet ist.

15. Back- und/oder Bratofen nach einem der vorhergehenden Ansprüche,
**dadurch gekennzeichnet,**
**dass** die Gebläseeinrichtung (4) hinter einer perforierten Seitenwand (40) des Garraumes (2) angeordnet und ihre Blasrichtung gegen diese Seitenwand gerichtet ist.

16. Back- und/oder Bratofen nach Anspruch 14 und 15,
**dadurch gekennzeichnet,**
**dass** der blanke Heizdraht (10) zwischen der perforierten Seitenwand (40) und der Gebläseeinrichtung (4) angeordnet ist.

17. Back- und/oder Bratofen nach einem der vorhergehenden Ansprüche,
**dadurch gekennzeichnet,**
**dass** die Wände (38,40,42) des Garraumes (2) aus einem gut wärmeleitenden Material bestehen und den Garraum (2) von Abschnitten des Abluftweges (16) und/oder des Frischluftzufuhrweges (14) trennen und als Wärmetauscherflächen zwischen dem Garraum (2) und dem Abluftweg (16) bzw. dem Frischluftzufuhrweg (14) ausgebildet sind.
